(19) Europäisches Patentamt
European Patent Office
Office européen des brevets

(11) **EP 3 805 335 A1**

(12) **EUROPEAN PATENT APPLICATION**
published in accordance with Art. 153(4) EPC

(43) Date of publication:
**14.04.2021 Bulletin 2021/15**

(51) Int Cl.:
***C09J 201/00*** (2006.01)    ***C09J 7/32*** (2018.01)
***C09J 11/06*** (2006.01)    ***C09J 121/00*** (2006.01)
***C09J 133/00*** (2006.01)

(21) Application number: **19811836.6**

(22) Date of filing: **28.05.2019**

(86) International application number:
**PCT/JP2019/020990**

(87) International publication number:
**WO 2019/230677 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.05.2018 JP 2018102821
27.05.2019 JP 2019098480**

(71) Applicant: **NITTO DENKO CORPORATION
Ibaraki-shi
Osaka 567-8680 (JP)**

(72) Inventors:
• **KIRA, Yoshiko
Ibaraki-shi, Osaka 567-8680 (JP)**
• **TANI, Kensuke
Ibaraki-shi, Osaka 567-8680 (JP)**

(74) Representative: **Müller-Boré & Partner
Patentanwälte PartG mbB
Friedenheimer Brücke 21
80639 München (DE)**

(54) **PRESSURE-SENSITIVE ADHESIVE COMPOSITION, PRESSURE-SENSITIVE ADHESIVE LAYER, AND PRESSURE-SENSITIVE ADHESIVE SHEET**

(57) The present invention relates to an adhesive composition containing a base polymer and a moisture-curable component, wherein a degree of swelling when an adhesive layer is formed is 2.5 or less, an adhesive layer comprising the adhesive composition, and an adhesive sheet comprising the adhesive layer.

Fig. 1

**Description**

TECHNICAL FIELD

The present invention relates to an adhesive composition, an adhesive layer comprising the adhesive composition, and an adhesive sheet comprising the adhesive layer.

BACKGROUND ART

Conventionally, a moisture-curable adhesive and an adhesive sheet using the moisture-curable adhesive have both high initial adhesive force and sufficient adhesive force with time, and therefore are known in adhesive fixation in various fields.

For example, Patent Literature 1 describes a photopolymerizable composition which can provide a moisture-curable adhesive having sufficient adhesive strength to an adherend having an uneven surface such as an inorganic material, e.g., concrete or the like, or wood by photopolymerization, and a moisture-curable adhesive sheet obtained by using this composition.

CITATION LIST

PATENT LITERATURE

Patent Literature 1: JP-A-2000-273418

SUMMARY OF INVENTION

TECHNICAL PROBLEM

However, in Patent Literature 1, the adhesive strength to an adherend having an uneven surface such as an inorganic material, e.g., concrete or the like, or wood is investigated but the adhesive strength to a wet surface is not investigated at all.

Moreover, the conventional adhesive has the problem that the adhesive strength is deteriorated in the case of using in the environment such as contact with water or exposure to water, over long term, and the improvement in water resistance is required.

Accordingly, an object of the present invention is to provide an adhesive composition containing a base polymer and a moisture-curable component, which gives high adhesive force to a wet surface and excellent water resistance by adjusting a degree of swelling in forming an adhesive layer to a specific range, an adhesive layer comprising the adhesive composition, and an adhesive sheet comprising the adhesive layer.

SOLUTION TO PROBLEM

The present inventors have conducted extensive studies for the purpose of providing an adhesive sheet showing high adhesive force to a wet surface and having excellent water resistance, and as a result, it has been conceived to use an adhesive composition containing a moisture-curable component as an adhesive composition for forming an adhesive layer. In addition, they have found that, in order to obtain high adhesive force to a wet surface and water resistance, it is important to suppress moisture absorption or swelling by water absorption of an adhesive layer, thereby suppressing the change in shape of the adhesive layer, and have completed the present invention.

One aspect of the present invention relates to an adhesive composition containing a base polymer and a moisture-curable component, wherein a degree of swelling when an adhesive layer is formed is 2.5 or less.

In one aspect of the present invention, the moisture-curable component may be at least one selected from an isocyanate compound and an alkoxysilyl group-containing polymer.

In one aspect of the present invention, the moisture-curable component may be aliphatic isocyanate or alicyclic isocyanate.

In one aspect of the present invention, the base polymer preferably contains a rubber-based polymer or an acrylic polymer.

In one aspect of the present invention, in the adhesive composition, a water absorption ratio when an adhesive layer is formed is preferably 20% by mass or less.

In one aspect of the present invention, in the adhesive composition, Young's modulus at 25°C when an adhesive layer is formed and cured by moisture is preferably 15 kPa or more and 100 kPa or less.

In one aspect of the present invention, in the adhesive composition, Young's modulus at 25°C when an adhesive layer is formed is preferably 10 kPa or more and 400 kPa or less.

One aspect of the present invention relates to an adhesive layer comprising the adhesive composition.

One aspect of the present invention relates to an adhesive sheet comprising the adhesive layer.

In one aspect of the present invention, the adhesive layer may be formed on a substrate.

ADVANTAGEOUS EFFECTS OF INVENTION

According to the present invention, there are provided an adhesive composition which gives high adhesive force to a wet surface and excellent water resistance, an adhesive layer comprising the adhesive composition, and an adhesive sheet comprising the adhesive layer.

BRIEF DESCRIPTION OF DRAWINGS

[FIG. 1] FIG. 1 is one example of a schematic cross-sectional view of an adhesive sheet according to the embodiment of the present invention.

[FIG. 2] FIG. 2 is one example of a schematic cross-sectional view of an adhesive sheet according to the embodiment of the present invention.

[FIG. 3] FIG. 3 is one example of a schematic cross-sectional view of an adhesive sheet according to the embodiment of the present invention.

[FIG. 4] FIG. 4 is one example of a schematic cross-sectional view of an adhesive sheet according to the embodiment of the present invention.

[FIG. 5] FIG. 5 is one example of a schematic cross-sectional view of an adhesive sheet according to the embodiment of the present invention.

[FIG. 6] FIG. 6 is one example of a schematic cross-sectional view of an adhesive sheet according to the embodiment of the present invention.

[FIG. 7] FIG. 7 is one example of a schematic cross-sectional view of an adhesive sheet according to the embodiment of the present invention.

DESCRIPTION OF EMBODIMENTS

Hereinafter, the embodiments of the present invention will be described in detail. The present invention is not construed as being limited to the embodiments explained below.

An adhesive composition according to an embodiment of the present invention is an adhesive composition containing a base polymer and a moisture-curable component, wherein a degree of swelling when an adhesive layer is formed is 2.5 or less.

An adhesive layer according to an embodiment of the present invention comprises the adhesive composition according to the embodiment of the present invention.

An adhesive sheet according to an embodiment of the present invention comprises the adhesive layer according to the embodiment of the present invention, and the adhesive layer is preferably formed on a substrate.

The "adhesive sheet" in the present description can include materials called "adhesive tape, "adhesive label", "adhesive film" and the like.

An "adhesive surface" is a surface (pasting surface) in the side which is pasted to an adherend in the adhesive sheet. In the adhesive sheet of the present invention, only one surface may be an adhesive surface and both surfaces may be an adhesive surface.

An "unreacted state" indicates the state that a curing reaction by water does not occur. Alternatively, it indicates the state that a functional group capable of chemically bonding to an adherend remains. In the present invention, the moisture-curable component in the vicinity of the surface of in an adhesive surface side of the adhesive layer is particularly preferably in an unreacted state.

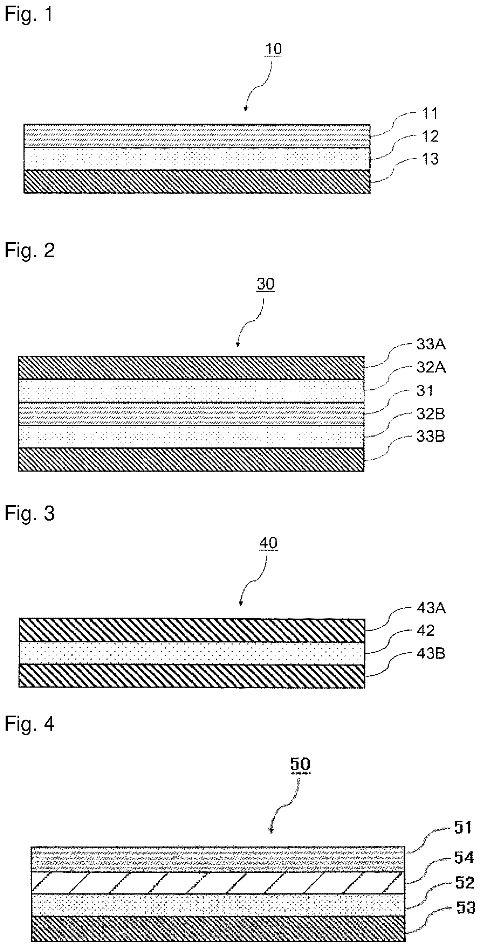

FIG. 1 is one example of a schematic cross-sectional view of the adhesive sheet according to the embodiment of the present invention.

An adhesive sheet 10 of the present embodiment comprises a substrate 11 and an adhesive layer 12, and the surface in the opposite side of the substrate 11 of the adhesive layer 12 may be peelably covered with a release liner 13.

The adhesive sheet 10 of the present embodiment is used by peeling and removing the release liner 13 and pasting to an adherend through the adhesive layer 12. In other words, in the adhesive layer 12 in the present embodiment, the surface in the release liner 13 side is an adhesive surface.

A layer which forms the adhesive sheet 10 of the present embodiment is hereinafter described in detail.

The adhesive layer 12 in the present embodiment comprises an adhesive composition containing a base polymer and a moisture-curable component in an unreacted state.

When the adhesive sheet 10 of the present embodiment is pasted to a wet surface of an adherend, the moisture-curable component in an uncured state contained in the adhesive composition (adhesive layer 12) reacts with water absorbed from the wet surface of the adherend or water such as surrounding water or moisture to undergo moisture curing, and thereby, the adhesive force to the adherend is increased. As a result, when the adhesive sheet is pasted to the wet surface of the adherend, the adhesive force is increased with time and high adhesive force can be exhibited. The case where the moisture-curable component is capable of chemically bonding to the adherend is preferable because the adhesive force to the adherend surface is further improved by the progress of the chemical bond between the moisture-curable component capable of chemically bonding to the adherend contained in the adhesive composition (adhesive layer 12) and the adherend surface.

The adhesive sheet according to the embodiment of the present invention may comprise a substrate and the adhesive layer provided on both surfaces thereof as shown in FIG. 2, and the adhesive layer may be protected by a release liner.

An adhesive sheet 30 of the present embodiment may comprise a first release liner 33A, a first adhesive layer 32A, a substrate 31, a second adhesive layer 32B and a second release liner 33B, in this order.

The adhesive sheet 30 of the present embodiment is used by peeling and removing the first release liner 33A and the second release liner 33 B and pasting the first adhesive layer 32A and the second adhesive layer 32B to the respective different adherends. In other words, in the present embodiment, both the surface in the first release liner 33A side of the first adhesive layer 32A and the surface in the second release liner side 33B of the second adhesive layer 32B are adhesive surfaces.

The substrate 31, the first and second adhesive layers 32A and 32B, and the first and second release liners 33A and 33B in the present embodiment are the same as the above-mentioned substrate 11, adhesive layer 12 and release liner 13.

Moreover, the adhesive sheet 30 in the present embodiment may be wound. In other words, the adhesive sheet 30 of the present embodiment does not comprise, for example, the second release liner 33B, and may be wound such that the adhesive surface of the second adhesive layer 32B is pasted to the surface opposite the first adhesive layer 32A of the release liner 33A.

As shown in FIG.3, the adhesive sheet according to the present embodiment may not comprise a substrate, and both surfaces of the adhesive layer may be protected by a release liner.

In other words, an adhesive sheet 40 of the present embodiment may comprise a first release liner 43A, an adhesive layer 42 and a second release liner 43B, in this order.

The adhesive sheet 40 of the present embodiment is used by peeling and removing the first release liner 43A and the second release liner 43 B and pasting one surface and another surface of the adhesive layer 42 to the respective different adherends. In other words, in the present embodiment, the surface in the first release liner 43A side of the adhesive layer 42 and the surface in the second release liner 43B of the adhesive layer 42 are adhesive surfaces.

As shown in FIGS. 4 to 7, the adhesive sheet of the embodiment of the present invention may comprise other adhesive layer (hereinafter sometimes referred to as "other adhesive layer") having a composition different from the adhesive layer (hereinafter sometimes referred to as "wet adhesive layer") according to the embodiment of the present invention.

FIG. 4 is one example of a schematic cross-sectional view of the adhesive sheet according to the embodiment of the present invention.

An adhesive sheet 50 of the present embodiment may comprise a substrate 51, a wet adhesive layer 52, and other adhesive layer 54 having a composition different from the wet adhesive layer 52, and the surface opposite the substrate 51 of the wet adhesive layer 52 may be peelably covered with a release liner 53.

The other adhesive layer 54 is an adhesive layer having a composition different from the wet adhesive layer 52, and may be an adhesive layer comprising any adhesive composition having a composition different from the adhesive composition constituting the wet adhesive layer 52.

The adhesive sheet 50 of the present embodiment is used by peeling and removing the release liner 53 and pasting to an adherend through the wet adhesive layer 52. In other words, in the wet adhesive layer 52 in the present embodiment, the surface in the release liner 53 side is an adhesive surface.

By comprising the other adhesive layer 54, the adhesive sheet 50 of the present embodiment can have an adhesive structure having a thickness capable of following to a rough surface of a concrete or the like.

Moreover, in the adhesive sheet 50 of the present embodiment, the adhesive surface is the wet adhesive layer 52 according to the present embodiment. Therefore, when the adhesive sheet is pasted to a wet surface of an adherend, the moisture-curable component in an unreacted state contained in the wet adhesive layer 52 reacts with water absorbed from the wet surface of the adherend or water such as surrounding water or moisture to undergo moisture curing, and thereby, the adhesive force to the adherend is increased. As a result, when the adhesive sheet is pasted to the wet surface of the adherend, the adhesive force is increased with time and high adhesive force can be exhibited.

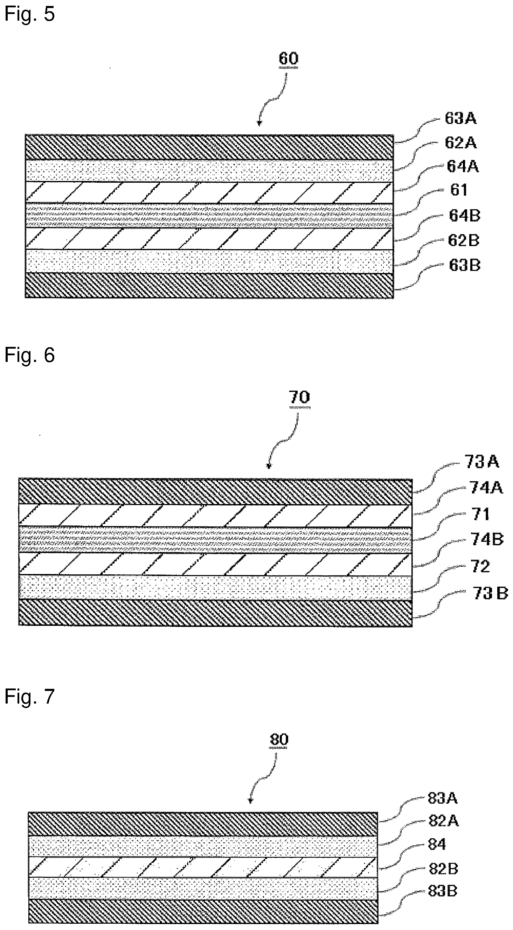

FIG. 5 is one example of a schematic cross-section view of the adhesive sheet according to the embodiment of the present invention.

An adhesive sheet 60 of the present embodiment shown in FIG. 5 may comprise a first release liner 63A, a first wet adhesive layer 62A, a first other adhesive layer 64A, a substrate 61, a second other adhesive layer 64B, a second wet adhesive layer 62B and a second release liner 63B, in this order.

In the adhesive sheet 60, the first wet adhesive layer 62A and the second wet adhesive layer 62B are the adhesive layers according to the embodiment of the present invention. The first other adhesive layer 64A and the second other adhesive layer 64B are other adhesive layers having a composition different from the first wet adhesive layer 62A and the second wet adhesive layer 62B, and may be adhesive layers comprising any adhesive composition having a composition different from the adhesive composition constituting first wet adhesive layer 62A and the second wet adhesive layer 62B.

The adhesive sheet 60 of the present embodiment is used by peeling and removing the first release liner 63A and the second release liner 63 B and pasting the first wet adhesive layer 62A and the second wet adhesive layer 62B to the respective different adherends. In other words, in the present embodiment, both the surface in the first release liner 63A side of the first wet adhesive layer 62A and the surface in the second release liner 63B of the second wet adhesive layer 62B are adhesive surfaces.

In the adhesive sheet according to the embodiment of the present invention, one adhesive surface can be the adhesive layer according to the embodiment of the present invention and another adhesive surface can be other adhesive layer.

FIG. 6 is one example of a schematic cross-section view of the adhesive sheet according to the embodiment of the present invention.

The adhesive sheet 70 of the present embodiment shown in FIG. 6 may comprise a first release liner 73A, a first other adhesive layer 74A, a substrate 71, a second other adhesive layer 74B, a wet adhesive layer 72 and a second release liner 73B, in this order.

In the adhesive sheet 70, the wet adhesive layer 72 is the adhesive layer according to the embodiment of the present invention. The first other adhesive layer 74A and the second other adhesive layer 74B are other adhesive layers having a composition different from the wet adhesive layer 72, and may be an adhesive layer comprising any adhesive composition having a composition different from the adhesive composition constituting the wet adhesive layer 72.

The adhesive sheet 70 of the present embodiment is used by peeling and removing the first release liner 73A and the second release liner 73 B and pasting the first other adhesive layer 74A and the wet adhesive layer 72 to the respective different adherends. In other words, in the present embodiment, both the surface in the first release liner 73A side of the first other adhesive layer 74A and the surface in the second release liner 73B of the wet adhesive layer 72 are adhesive surfaces.

The adhesive sheet according to the embodiment of the present invention may not comprise a substrate and may comprise the adhesive layer according to the embodiment of the preset invention on at least one surface of the other adhesive layer, and both adhesive surfaces may be protected by a release liner.

FIG. 7 is one example of a schematic cross-sectional view of the adhesive sheet according to the embodiment of the present invention.

An adhesive sheet 80 of the present embodiment shown in FIG. 7 may comprise a first release liner 83A, a first wet adhesive layer 82A, other adhesive layer 84, a second wet adhesive layer 82B and a second release liner 83B, in this order.

In the adhesive sheet 80, the first wet adhesive layer 82A and the second adhesive layer 82B are the adhesive layers according to the embodiment of the present invention. The other adhesive layer 84 is other adhesive layer having a composition different from the first wet adhesive layer 82A and the second wet adhesive layer 82B, and may be an adhesive layer comprising any adhesive composition having a composition different from the adhesive composition constituting the first wet adhesive layer 82A and the second adhesive layer 82B.

In the adhesive sheet 80 of the present embodiment, when the first release liner 83A and the second release liner 83B have been peeled and removed, the surface in the first release liner 83A side of the first wet adhesive layer 82A and the surface in the second release liner 83B side of the second wet adhesive layer 82B each are adhesive surfaces.

The adhesive sheet 80 comprises the adhesive layers (the first wet adhesive layer 82A and the second wet adhesive layer 82B) according to the embodiment of the present invention on both surfaces of the other adhesive layer 84, but may have a constitution which does not comprise the first wet adhesive layer 82A and comprises the adhesive layer (the second wet adhesive layer 82B) according to the embodiment of the present invention on one surface of the other adhesive layer 84.

When the adhesive layer comprising the adhesive composition of the present embodiment or the adhesive sheet comprising the adhesive layer (hereinafter collectively referred to as an "adhesive sheet) is pasted to a wet surface of an adherend, the moisture-curable component contained in an uncured state in the adhesive composition (adhesive layer) reacts with water absorbed from the wet surface of the adherend or water such as surrounding water or moisture to undergo moisture curing, and thereby, the adhesive force to the adherend is improved. As a result, when the adhesive sheet is pasted to the wet surface of the adherend, the adhesive force is increased with time and high adhesive force can be exhibited. The fact that the moisture-curable component reacts with water absorbed from a wet surface of an adherend can be confirmed by measuring an absorbance ratio of water in a peeling interface described hereinafter.

The case where the moisture-curable component is capable of chemically bonding to the adherend is preferable because the adhesive force to the adherend surface is further improved by the progress of the chemical bond between the moisture-curable component capable of chemically bonding to the adherend, contained in an unreacted state in the adhesive composition (adhesive layer) and the adherend surface.

(Adhesive composition)

In the adhesive composition according to the present embodiment, the degree of swelling when the adhesive layer is formed is 2.5 or less. When the degree of swelling is 2.5 or less, decrease in the adhesive force by swelling of the adhesive layer in contact with water or moisture can be prevented or controlled, even in the case where the adhesive layer is pasted to a wet surface of an adherend. Moreover, even when stored in water, the change in shape by the swelling of the adhesive layer is small and water resistance is excellent. Therefore, the adhesive layer is suitable for use in the environment such as contact with water, exposure to water, or the like over long term. Moreover, when the degree of swelling is 2.5 or less, even though slight peeling occurs after pasting and the adhesive layer swells, adhesive strength to the interface is strong and deterioration of peel force can be suppressed.

When the degree of swelling is larger than 2.5, the adhesive layer swells by the contact with water or moisture, leading to the change in shape, and there are possibilities of deterioration of adhesive force, deterioration of water resistance, protrusion from a substrate, and the like. Moreover, when the degree of swelling is larger than 2.5, even though slight peeling, when the adhesive layer is in contact with water after pasting, water intrusion into the interface between the adhesive layer and the adherend proceeds with the swelling of the adhesive layer as a trigger, and peeling may proceed.

The degree of swelling is 2.5 or less, preferably 2.3 or less, and still more preferably 1.5 or less. Lower degree of swelling is preferable, and the lower limit thereof is not particularly limited, but is, for example, 1.1.

The degree of swelling can be calculated from a ratio of the thickness of the adhesive layer after dipping in 25°C pure water for 24 hours to the thickness of the adhesive layer before dipping. For example, a sample prepared by lining an adhesive layer having a thickness of 1 mm with 20 $\mu$m aluminum foil and cutting the adhesive into a size of 2 cm square is dipped in 25°C pure water for 24 hours, and the thicknesses of the adhesive layer before and after dipping are measured. The degree of swelling can be calculated by the following formula. The thickness of the adhesive layer can be obtained by measuring thicknesses of five points in a central part of the sample, and an average value of those can be adopted. Moreover, the thickness of the adhesive layer can be measured by the method described in the examples.

$$\text{Degree of swelling} = \text{Thickness of adhesive layer after dipping/thickness of adhesive layer before dipping}$$

In the present embodiment, when water absorbency of the adhesive layer is low, water is difficult to be accumulated in the adhesive layer. As a result, storage stability of the moisture-curable component is improved and the swelling of the adhesive layer can be suppressed, which are preferable. When water absorbency of the adhesive layer is low, the surrounding water (water or moisture) is difficult to be accumulated in the adhesive composition (adhesive layer). For this reason, the moisture-curable component can be suppressed from reacting with the surrounding water or moisture to undergo moisture curing when storing the adhesive composition, when preparing the adhesive sheet from the adhesive composition or in the stage before pasting the adhesive sheet to an adherend. As a result, the preparation of the adhesive layer or adhesive sheet from the adhesive composition, and the pasting of the adhesive sheet to an adherend are prevented from becoming difficult, and sufficient adhesive force is easy to be exhibited after pasting.

In the present embodiment, when a water absorption ratio of the adhesive layer during storage at 25°C/50% RH is low, water is difficult to be accumulated in the adhesive layer, and as a result, storage stability of the moisture-curable component is improved, which is preferable. When the water absorption ratio of the adhesive layer is low, the surrounding water (water or moisture) is difficult to be accumulated in the adhesive composition (adhesive layer). For this reason, the moisture-curable component can be suppressed from reacting with the surrounding water or moisture to undergo moisture curing when storing the adhesive composition, when preparing the adhesive sheet from the adhesive composition or in the stage before pasting the adhesive sheet to an adherend. As a result, the preparation of the adhesive layer or adhesive sheet from the adhesive composition, and the pasting of the adhesive sheet to an adherend are prevented from becoming difficult, and sufficient adhesive force is easy to be exhibited after pasting.

Therefore, in the adhesive composition of the present embodiment, the water absorption ratio after storing in 25°C pure water for 24 hours (hereinafter simply referred to as "water absorption ratio") is preferably 20% by mass or less. When the water absorption ratio of the adhesive layer is 20% by mass or less, water absorbency is decreased and the surrounding water (water and moisture) can be sufficiently prevented or suppressed from being accumulated (liquid absorption) in the adhesive composition (adhesive layer) when storing the adhesive composition, when preparing the adhesive sheet from the adhesive composition, when storing the adhesive sheet or in the stage before pasting the adhesive sheet to an adherend. Moreover, even in the case where the adhesive sheet is pasted to an adherend and then used in water, the adhesive layer can be prevented or suppressed from absorbing water. By this, the swelling of the adhesive layer can be prevented or suppressed. As a result, the adhesive sheet can be well pasted to a wet surface of an adherend and exhibits good adhesive force, and water resistance is further easily obtained. The water absorption ratio is more preferably 10% by mass or less, still more preferably 5% by mass or less, and particularly preferably 1% by mass or less. The water absorption ratio is preferably low, and the lower limit is not particularly limited, but is, for example, 0.1% by mass.

The water absorption ratio of the adhesive layer after storing in 25°C pure water for 24 hours can be measured by Karl Fisher moisture evaporation coulometric titration method (JIS K0113: 2005). Specifically, the amount of water generated by heating evaporation at 200°C for 30 minutes is measured using Hiranuma Moisture Meter AQ-2100 manufactured by HIRANUMA, and the proportion to the mass of a sample before heating can be calculated as the water absorption ratio.

$$\text{Water absorption ratio (\% by mass)} = (\text{Amount of water by Karl Fisher}$$
$$\text{measurement/total mass of a sample before measurement}) \times 100$$

In the adhesive composition of the present embodiment, Young's modulus (initial) at 25°C of an adhesive layer when the adhesive layer is formed (before moisture curing) is preferably 0.1 kPa or more, more preferably 1 kPa or more, still more preferably 5 kPa or more, and particularly preferably 10 kPa or more. When the initial Young's modulus is 0.1 kPa or more, deformation of the adhesive layer is difficult to occur, and shape stability of the adhesive sheet is good. Moreover, disadvantages such as the overflow of an adhesive by stress applied after adhering are difficult to occur.

From the viewpoint of adhesion to a wet surface, the initial Young's modulus is preferably 400 kPa or less, preferably 200 kPa or less and more preferably 100 kPa or less. When the initial Young's modulus is 400 kPa or less, the adhesive composition can well follow to uneven rough surface of a wet adherend.

The adhesive composition of the present embodiment forms an adhesive layer, and Young's modulus (after curing) at 25°C of the adhesive layer after storing in 25°C pure water for 24 hours (after moisture curing) is preferably 5 kPa or more, more preferably 8 kPa or more, and still more preferably 10 kPa or more. When the Young's modulus (after curing) is 5 kPa or more, the adhesive layer shows good adhesive force and can exhibit excellent water resistance, even in the use in water.

Moreover, when the adhesive layer contains a water-absorbing polymer, the Young's modulus (after curing) of the adhesive layer is preferably 10 kPa or more, more preferably 12 kPa or more, and still more preferably 15 kPa or more, from the viewpoint that excessive swelling of the water-absorbing polymer can be suppressed. Moreover, the Young's modulus (after curing) is preferably 400 kPa or less, and more preferably 100 kPa or less. When the Young's modulus (after curing) is 400 kPa or less, anchor destruction with a substrate can be suppressed, and deterioration of adhesive force due to the swelling of the adhesive layer exposed by the peeling of a substrate can be prevented and suppressed.

The initial Young's modulus and Young's modulus (after curing) of an adhesive layer when the adhesive layer is formed can be calculated from a stress-strain curve when preparing a sample by forming the adhesive layer into a string shape and pulling the sample in a rate of 50 mm/min using a tensile tester (AG-IS manufactured by Shimadzu Corporation).

In the adhesive composition of the present embodiment, the base polymer preferably contains a polymer that does not have a functional group reacting with the moisture-curable component. Such a polymer includes a polymer that does not have a functional group (non-functional polymer). Alternatively, the base polymer may be a polymer having a functional group that does not react with the moisture-curable component.

By using a polymer that does not have a functional group reacting with the moisture-curable component, the reaction between the base polymer and the moisture-curable component in each stage before pasting the adhesive sheet to an adherend is prevented, and the adhesive composition, adhesive layer or adhesive sheet having excellent storage stability can be obtained. As a result, the adhesive sheet can be well pasted to a wet surface of an adherend, and can exhibit good adhesive force.

Examples of the functional group reacting with the moisture-curing component include polar functional groups such as a carboxyl group, a hydroxyl group, an amide group, an amino group, a cyano group, a sulfonate group, a phosphate group, an imide group, an isocyanate group, an alkoxy group, a silanol group, and the like.

The base polymer constituting the adhesive composition in the present embodiment is not particularly limited, and can use the conventional polymers used in an adhesive. Examples of the base polymer include acrylic polymers, rubber-based polymers, vinyl alkyl ether-based polymers, silicone-based polymers, polyester-based polymers, polyamide-based polymers, urethane-based polymers, fluorine-based polymers, epoxy-based polymers, and the like. Among the above-exemplified polymers, acrylic polymers and rubber-based polymers are preferable from the viewpoint of adhesiveness, and rubber-based polymers are more preferable from the viewpoint of hydrophobicity.

By containing hydrophobic polymers, the adhesive layer becomes hydrophobic, and when the adhesive sheet 10 is pasted to a wet surface of an adherend, there is the effect that the adhesive layer repels the moisture on a wet surface which hinders adhesion between the adhesive sheet and an adherend and excludes water from the interface between the adherend and the adhesive layer. By this, the water is difficult to be incorporated in the adhesive layer and as a result, the initial adhesive force to an adherend of the adhesive sheet is improved. In addition, the reaction of the moisture-curing component and water can be delayed.

In the present embodiment, examples of the rubber-based polymers include isobutylene-based polymers such as polyisobutylene (PIB), copolymers of isobutylene and normal butylene, copolymers of isobutylene and isoprene (e.g., butyl rubbers such as regular butyl rubber, chlorinated butyl rubber, brominated butyl rubber and partially crosslinked butyl rubber), and vulcanized products thereof; styrene-based thermoplastic elastomers such as styrene-ethylene-butylene-styrene block copolymer (SEBS), styrene-isoprene-styrene block copolymer (SIS), isoprene rubber (IR), styrene-butadiene-styrene block copolymer (SBS), styrene-ethylene-propylene-styrene block copolymer (SESP, a hydrogenated product of SIS), styrene-ethylene-propylene block copolymer (SEP, a hydrogenated product of styrene-isoprene copolymer), styrene-isobutylene-styrene block copolymer (SIBS), styrene-butadiene rubber (SBR) and other styrene-based block copolymers; butyl rubber (IIR), butadiene rubber (BR), acrylonitrile-butadiene rubber (NBR), EPR (binary ethylene-propylene rubber), EPT (ternary ethylene-propylene rubber), acrylic rubber, urethane rubber, silicone rubber, and the like. Among them, PIB, IIR, IR, SIS and SIBS are preferable and PIB is more preferable, from the viewpoint of a low water absorption ratio. Those may be used in one kind alone or by combining two or more kinds.

Rubber modifier may be blended in order to impart excellent adhesiveness to the adhesive composition. Examples of the rubber modifier include paraffins, waxes, naphthenes, aromas, asphalts, drying oils (for example, linseed oil), animal and vegetable oils, petroleum-based oils (for example, process oil), polybutene, low molecular weight polyethylene glycol, phthalic esters, phosphoric esters, stearic acid or its esters, alkyl sulfonic acid esters, and the like. Those rubber modifiers can be used alone or as a combination of two or more kinds. Petroleum-based oils and polybutene are preferable.

In the present embodiment, the acrylic polymer is a polymer comprising (meth)acrylic ester as a main monomer component, and the acrylic polymer containing (meth)acrylic alkyl ester ((meth)acrylic alkyl ester having straight chain or branched chain alkyl group) as a main monomer component can be preferably used. Examples of the (meth)acrylic alkyl ester include acrylic acid alkyl esters having 1 to 20 carbon atoms such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and the like. Among them, (meth)acrylic acid alkyl esters having an alkyl group having 1 to 14 carbon atoms are preferable, and (meth)acrylic acid alkyl esters having an alkyl group having 2 to 10 carbon atoms are more preferable. The "(meth)acrylic ester" means "acrylic ester" and/or "methacrylic ester" and the same applies to the others.

Examples of (meth)acrylic ester other than the above-mentioned (meth)acrylic alkyl ester include (meth)acrylic esters having an alicyclic hydrocarbon group such as cyclopentyl (meth)acrylate, cyclohexyl (meth)acrylate and isobornyl (meth)acrylate, (meth)acrylic esters having an aromatic hydrocarbon group such as phenyl (meth)acrylate, and the like.

The (meth)acrylic esters can be used alone or by combining two or more kinds. When a monomer does not have a polar functional group, the monomer other than an acrylic monomer may be copolymerized with the (meth)acrylic ester.

In the present embodiment, the content of (meth)acrylic alkyl ester in the monomer component constituting the acrylic polymer is preferably 80% by mass or more, more preferably 90% by mass or more, and still more preferably 100% by mass.

The base polymer in the present embodiment preferably contains a polymer that does not have a functional group capable of reacting with the moisture-curable component, and more preferably does not contain a polymer having a functional group capable of reacting with the moisture-curable component, from the viewpoint of storage stability of the moisture-curable component.

In the present embodiment, to form an acrylic polymer that does not have a functional group reacting with the moisture-curable component, it is preferable that a monomer having a functional group capable of reacting with the moisture-curable component, such as a polar group-containing monomer or a polyfunctional monomer, is not used.

Examples of the functional group reacting with the moisture-curable component include polar functional groups such as a carboxyl group, a hydroxyl group, an amide group, an amino group, a cyano group, a sulfonate group, a phosphate group, an imide group, an isocyanate group, an alkoxy group and silanol group.

In addition, the base polymer may contain a polymer (hereinafter referred to as other polymer) such as a modifier other than the polymer that does not have a functional group reacting with the moisture-curable component to the extent that the advantageous effects of the present invention are not significantly impaired. In that case, the content ratio of the other polymer to the entire base polymer (100% by mass) is preferably 75% by mass or less and more preferably 60% by mass or less.

Moreover, the content of the polymer that does not have a functional group reacting with the moisture-curable component to the entire base polymer (100% by mass) may be 100% by mass. When the other polymer is contained, the content thereof is preferably 80% by mass or less, and more preferably 60% by mass or less. Further, the content of the polymer that does not have a functional group reacting with the moisture-curable component is preferably 25% by mass or more and more preferably 40% by mass or more, in order to exhibit the above-mentioned effect well.

The base polymer in the present embodiment preferably contains a polymer having a functional group that becomes a functional group capable of reacting with the moisture-curable component through a reaction with water. In this case, when having been pasted to a wet surface, the polymer having the functional group becomes a polymer having a functional group capable of reacting with the moisture-curable component through the reaction with moisture or the like absorbed from a wet surface. In addition to the curing of the moisture-curable component, by the progress of a crosslinking reaction of the polymer having a functional group capable of reacting with the moisture-curable component and the moisture-curable component, cohesive force of the adhesive layer is further improved and adhesiveness is further improved.

The polymer having a functional group that becomes a functional group capable of reacting with the moisture-curable component through the reaction with water, contained in the base polymer does not react with the moisture-curable component before the reaction with water, and as a result, storage stability of the moisture-curable component until pasting the adhesive sheet to a wet surface is secured. From the viewpoint of the securing of storage stability of the moisture-curable component, it is considered to use a non-polar polymer that does not react with the moisture-curable component. However, since the non-polar polymer does not react with the moisture-curable component, strength as the entire adhesive layer is decreased.

Examples of the polymer having a functional group that becomes a functional group capable of reacting with the moisture-curable component through a reaction with water include polymers modified with maleic anhydride or amine, polymers modified with a substituent that becomes a hydroxyl group through a reaction with water, and the like. Among them, from the viewpoint of storage stability of the moisture-curable component, a polymer modified with maleic anhydride (maleic anhydride-modified polymer) is preferable. For example, a maleic anhydride group of the polymer modified with maleic anhydride becomes a carboxyl group by ring opening through a reaction with water. The polymer having a carboxyl group and the moisture-curable component can undergo a crosslinking reaction.

The content of the base polymer in the adhesive composition according to the present embodiment is not particularly limited, but from the viewpoint of initial adhesive force, based on all the components of the adhesive composition excluding a solvent, that is, when the total amount of the components of the adhesive composition excluding the solvent is 100% by mass, the content of the base polymer is preferably 5% by mass or more, more preferably 10% by mass or more, and still more preferably 20% by mass or more. Further, the content of the base polymer is, from the viewpoint of containing the moisture-curable component and the like, preferably 90% by mass or less, more preferably 80% by mass or less, and still more preferably 70% by mass or less, based on all the components of the adhesive component excluding a solvent.

In the present embodiment, the moisture-curable component is a component having a property (moisture curability) that causes a curing reaction due to the presence of water (water or moisture). For example, the moisture-curable component includes a resin or a compound which has, in the molecule, one or more hydrolyzable reactive groups or functional groups that start the reaction with water, and which starts curing with water (water or moisture) in the surroundings such as the air.

The moisture-curable component to be used in the adhesive composition of the present embodiment has moisture curability. When the adhesive sheet comprising an adhesive layer made from the adhesive composition of the present embodiment is pasted to an adherend, the moisture-curable component itself in an unreacted state cures with the water absorbed from the wet surface or water such as surrounding water or moisture and thereby adhesiveness is further improved. Moreover, the moisture-curable component is preferably a component capable of chemically bonding to an adherend to which the adhesive sheet is pasted. In such a case, adhesiveness is further improved by the progress of chemical bonding between the moisture-curable component in an unreacted state and the adherend.

Examples of the moisture-curable component to be used in the present embodiment include isocyanate compounds, alkoxysilyl group-containing polymers, cyanoacrylate-based compounds, urethane-based compounds, and the like. Among them, the moisture-curable component is preferably selected from isocyanate compounds and alkoxysilyl group-containing polymers in view of compatibility with the base polymer and curing rate. The moisture-curable component may be used in one kind alone or by combining two or more kinds.

An isocyanate compound (isocyanate) is hydrolyzed in the presence of water to form an amine, and curing is achieved by the reaction of the isocyanate with the amine to form a urea bond. In addition, an isocyanate compound can form a chemical bond with a hydroxyl group, an amino group, a carboxyl group, and the like on the surface of an adherend.

Examples of the isocyanate compound include aliphatic isocyanates, alicyclic isocyanates, aromatic isocyanates, and the like. Among them, aliphatic isocyanates and alicyclic isocyanates are preferable because they have good compatibility with the base polymer, particularly a rubber-based polymer, and have a mild reactivity with moisture and water.

Examples of the aliphatic isocyanates include ethylene diisocyanate, propylene diisocyanate, tetramethylene diisocyanate, hexamethylene diisocyanate (HDI), trimethylhexamethylene diisocyanate (TMHMDI), dodecamethylene diisocyanate, lysine diisocyanate (LDI), lysine triisocyanate (LTI), and the like. Among them, hexamethylene diisocyanate is preferable.

Examples of the alicyclic isocyanate include isophorone diisocyanate (IPDI), cyclohexylene diisocyanate (CHDI), 4,4'-dicyclohexylmethane diisocyanate, hydrogenated XDI ($H_6$XDI), hydrogenated MDI ($H_{12}$MDI), norbornene diisocyanate (NBDI), and the like.

Examples of the aromatic isocyanates include diphenylmethane diisocyanates (MDI) such as 4,4'-diphenylmethane diisocyanate, 2,4'-diphenylmethane diisocyanate, and 2,2'-diphenylmethane diisocyanate; crude diphenylmethane diisocyanate; polynuclear polyphenylene polymethyl polyisocyanate (polymeric MDI); tolylene diisocyanates (TDI) such as 2,4-toluene diisocyanate and 2,6-toluene diisocyanate; naphthalene diisocyanates (NDI) such as 1,4-naphthalene diisocyanate and 1,5-naphthalene diisocyanate; 1,5-tetrahydronaphthalene diisocyanate; phenylene diisocyanates (PDI) such as 1,2-phenylene diisocyanate, 1,3-phenylene diisocyanate, and 1,4-phenyl diisocyanate; xylene diisocyanates (XDI); tetramethylxylylene diisocyanate (TMXDI); tolidine diisocyanate (TODI); 2,4,6-trimethylphenyl-1,3-diisocyanate, 2,4 6-triisopropylphenyl-1,3-diisocyanate, chlorophenylene-2,4-diisocyanate, 4,4'-diphenyl ether diisocyanate, 3,3'-dimethyl-4,4'-diphenylmethane diisocyanate, 3,3'-dimethoxy-4,4'-diphenylene diisocyanate, 3,3'-dichloro-4,4'-biphenylene diisocyanate, and the like.

An alkoxysilyl group-containing polymer is hydrolyzed in the presence of water to form a silanol and is cured through condensation (crosslinking). In addition, an alkoxysilyl group-containing polymer can form a strong chemical bond through a dehydration condensation reaction, or the like with a hydroxyl group on the surface of an adherend.

As the alkoxysilyl group-containing polymer, for example, there can be used one or more selected from linear dimethoxy group-both terminal type ones such as Silyl SAX220 and Silyl SAT350, linear dimethoxy group-one terminal type ones such as Silyl SAT145, linear trimethoxy group-both terminal type ones such as Silyl SAX510 and Silyl SAT580, branched dimethoxy group-terminal type ones such as Silyl SAT400, and acrylic modified type ones such as Silyl MA440, Silyl MA903, and Silyl MA904 manufactured by Kaneka Corporation.

In the adhesive sheet (adhesive layer) of the present embodiment, the maintenance ratio (residual ratio) of the moisture-curable component in the adhesive composition after storing at 25°C and 50% RH is preferably 30% or more, more preferably 40% or more, and still more preferably 50% or more. Higher maintenance ratio (residual ratio) is preferable, and 100% is most preferable. The maintenance ratio (residual ratio) can be measured by the method described in the examples.

For example, in the case of using an isocyanate compound as the moisture-curable component, the maintenance ratio in the vicinity of the surface in an adhesive surface side of the adhesive layer after storage under the environment of 25°C and 50% RH for 24 hours can be obtained from infrared absorption spectrum obtained by Attenuated Total Reflection (ATR method). The ATR method is a measurement method that can obtain infrared absorption spectrum in a region of a depth of several μm from the surface of a sample, and is therefore suitable for the measurement of the maintenance ratio of the moisture-curable component in the vicinity of the surface of the adhesive layer. Specifically, the maintenance ratio can be measured as follows.

First, the ratio of the absorbance at 2275 cm$^{-1}$ derived from the isocyanate group and the absorbance at 1462 cm$^{-1}$ derived from the methylene group of the base polymer obtained from the infrared spectroscopic measurement by ATR method of the adhesive sheet (adhesive layer) immediately after production is calculated. Here, the absorbance ratio is the ratio of the absorbance derived from the above-mentioned isocyanate group to the absorbance derived from the above-mentioned methylene group (the absorbance derived from the isocyanate group/the absorbance derived from the methylene group). In addition, the absorbance ratio obtained from the infrared spectroscopic measurement by ATR method of the adhesive sheet (adhesive layer) after storage under the environment of 25°C and 50% RH for 24 hours is similarly calculated, and the maintenance ratio of the moisture-curable component (isocyanate compound) is calculated from the change ratio thereof. Specifically, it is calculated from the following relational expression.

Maintenance ratio of moisture-curable component (isocyanate compound) (%) = {(Absorbance ratio of adhesive sheet after storage under environment of 25°C and 50% RH for 24 hours)/(Absorbance ratio of adhesive sheet immediately after production)} $\times$ 100

Also in the case where the moisture-curable component is other than an isocyanate compound, the maintenance ratio of the moisture-curable component in the vicinity of the surface in the adhesive layer surface side of the adhesive layer can be similarly calculated from the change ratio of absorbance ratio at a wave number at which a representative peak derived from the moisture-curable component appears in the infrared spectroscopic measurement by ATR method.

For example, in the case where an alkoxysilyl group-containing polymer is used as the moisture-curable component, the maintenance ratio of the moisture-curing component in the vicinity of the surface in an adhesive surface side of the adhesive layer after storage under the environment of 25°C and 50% RH for 24 hours can be evaluated by determining the amount of alcohol formed by thermal decomposition of an alkoxysilyl group, in the adhesive layer by gas chromatograph mass spectrometry (GC/MS). Specifically, it can be measured as follows.

First, the amount of alcohol obtained from GC/MS of the adhesive sheet (adhesive layer) immediately after production and the amount of alcohol obtained from GC/MS of the adhesive sheet (adhesive layer) after storage under the environment of 25°C and 50% RH for 24 hours are determined, and the maintenance ratio of the moisture-curable component (alkoxysilyl group) can be calculated from the change ratios of those. Specifically, it is calculated from the following relational expression.

Maintenance ratio of moisture-curing component (alkoxysilyl group) (%) = [(Amount of alcohol obtained from GC/MS of adhesive sheet (adhesive layer) after storage under environment of 25°C and 50% RH/Amount of alcohol obtained from GC/MS of adhesive sheet (adhesive layer) immediately after storage)] $\times$ 100

In the moisture-curable component, the curability in the environment of 20°C and 60% RH is preferably low. The curability of the moisture-curable component can be confirmed by, for example, a finger touch dryness test and a curing and drying test based on JIS K-5400. In the case of the finger touch dryness test, the moisture-curable component preferably does not cure after the passage of 6 hours under the environment of 20°C and 60% RH. In the case of the curing drying test, the moisture-curable component preferably does not cure after the passage of 4 hours under the environment of 20°C and 60% RH.

The isocyanate compound which can satisfy the above curability includes aliphatic isocyanate.

The content of the moisture-curable component in the adhesive composition according to the present embodiment is not particularly limited, but from the viewpoint of obtaining high adhesive force, the content is preferably 1 part by mass or more, more preferably 2 parts by mass or more, and still more preferably 5 parts by mass or more, based on 100 parts by mass of the base polymer. In addition, from the possibility that when the moisture-curable component is excessive, the moisture-curable component does not dissolve in the base polymer and bleeds out on the surface of the adhesive, and adhesive characteristics are deteriorated, the content of the moisture-curable component is preferably 150 parts by mass or less, more preferably 100 parts by mass or less, and particularly preferably 80 parts by mass or less, based on 100 parts by mass of the base polymer in the adhesive composition. The preferable range of the content of the moisture-curable component based on 100 parts by mass of the base polymer in the adhesive layer is substantially the same as the preferable range of the content of the moisture-curable component based on 100 parts by mass of the base polymer in the adhesive composition, and the other component that can be contained in the adhesive composition (adhesive layer) is the same.

The adhesive composition of the present embodiment may further contain a water-absorbing material to the extent that the degree of swelling when the adhesive layer is formed can be 2.5 or less. Here, the water-absorbing material refers to a material capable of absorbing and retaining water. When the adhesive composition contains the water-absorbing material, at the time when the adhesive sheet 10 is pasted to the wet surface of the adherend, the water-absorbing material absorbs and retains the water on the wet surface, which interferes with the adhesion between the adhesive sheet 10 and the adherend, and thereby the initial adhesive force to the adherend of the adhesive sheet 10 is well exhibited. In addition, since the water on the wet surface of the adherend is absorbed and removed by the water-absorbing material, the adhesive sheet 10 can well follow even to an adherend having an uneven surface. As a result, the adhesiveness to the wet surface is more easily improved.

As the water-absorbing material, an organic water-absorbing material such as a water-absorbing polymer or an inorganic water-absorbing material can be used. Among them, a water-absorbing polymer is preferably used. The water-absorbing material may be used in one kind alone or may be used by combining two or more kinds.

Examples of the water-absorbing polymer include polyacrylic acids, water-soluble celluloses, polyvinyl alcohols, polyethylene oxides, starches, alginic acids, chitins, polysulfonic acids, polyhydroxymethacrylates, polyvinylpyrrolidones, polyacrylamides, polyethyleneimines, polyallylamines, polyvinylamines, maleic anhydrides, copolymers of monomers constituting those, and the like. The water-absorbing polymer may be used in one kind alone or may be used by combining two or more kinds.

Among them, a polyacrylic acid sodium salt or a copolymer of maleic anhydride and polyisobutylene is preferable, and a copolymer of maleic anhydride and polyisobutylene is more preferable.

A commercially available product may be used as the water-absorbing polymer. As commercially available products of the water-absorbing polymers, there can be suitably used, for example, KC Flock (cellulose powder, manufactured by Nippon Paper Chemicals Co., Ltd.), Sunrose (carboxymethyl cellulose, manufactured by Nippon Paper Chemicals, Co., Ltd.), Aqualic CA (acrylic acid polymer partial sodium salt crosslinked product, manufactured by Nippon Shokubai Co., Ltd.), Acryhope (acrylic acid polymer partial sodium salt crosslinked product, manufactured by Nippon Shokubai Co., Ltd.), Sunwet (polyacrylate salt crosslinked product, manufactured by San-Dia Polymers, Ltd.), Aqua Pearl (polyacrylate salt crosslinked product, manufactured by San-Dia Polymers, Ltd.), Aqua Keep (acrylic acid polymer partial sodium salt crosslinked product, manufactured by Sumitomo Seika Chemicals Co., Ltd.), Aquacalk (modified polyalkylene oxide, manufactured by Sumitomo Seika Chemicals Co., Ltd.), KI gel (isobutylene-maleic anhydride copolymer crosslinked product, manufactured by Kuraray Co., Ltd.), and the like. In addition, in those water-absorbing polymers, water-absorbing performance may be adjusted by blending inorganic salts or hydrophobicizing hydrophilic groups (for example, carboxylic acid) in the polymer.

Examples of the inorganic water-absorbing material include silica gel, inorganic polymers such as Sumecton SA manufactured by Kunimine Industries Co., Ltd., and the like.

In the adhesive composition in the present embodiment, the content of the water-absorbing material in the case of further containing the water-absorbing material is not particularly limited, but from the viewpoint of the adjustment of the degree of swelling when the adhesive layer is formed, the content is more preferably 50 parts by mass or less, still more preferably 30 parts by mass or less, and particularly preferably 0 part by mass, based on 100 parts by mass of the base polymer.

The phenomenon that the moisture-curable component in the adhesive layer of the present embodiment reacts with water absorbed from the wet surface to undergo moisture curing can be confirmed by measuring the absorbance ratio of water on the wet surface. For example, the phenomenon can be confirmed by comparing the absorbance ratio of water on the wet surface with absorbance ratio of water measured on the surface where the adhesive sheet of the present embodiment was pasted to the wet surface and then peeled. Specifically, it can be measured as follows.

Slate plate is dipped in tap water and treated with an ultrasonic deaeration apparatus (BRANSON 3510 manufactured by Yamato Scientific Co., Ltd.) for 30 minutes. The slate plate is allowed to stand for 24 hour and taken out of the water. Thus, a wet slate plate is prepared.

Regarding the surface of the wet slate plate obtained, the ratio (absorbance ratio of water) of the absorbance in the peak (1410 cm$^{-1}$) derived from calcium carbonate and the absorbance in the peak (3350 cm$^{-1}$) derived from a hydroxyl group of water by Fourier transform infrared spectroscopy (using 3100 ET-IR manufactured by Varian, measuring by ATR method) is calculated. The absorbance ratio of water is a ratio of the absorbance derived from the hydroxyl group to the absorbance derived from the calcium carbonate (absorbance derived from calcium carbonate/absorbance derived from hydroxyl group).

Next, the adhesive sheet according to the present embodiment is press-bonded and pasted to the surface (wet surface) of the wet slate plate from which water was wiped, by one reciprocation of 2 kg roller. To prevent drying of the slate, each slate is covered with a wrap one by one, and the entire surface is covered with an aluminum foil, followed by allowing to stand for 72 hours. Thereafter, the slate plate having the adhesive sheet (test piece) pasted thereto is taken out, the adhesive sheet is peeled, and the absorbance ratio (absorbance ratio of water in peeling interface) of the water on the surface from which the adhesive sheet was peeled, of the slate plate is measured.

In the case where the absorbance ratio of the water in the peeling interface is smaller than the absorbance ratio of the water on the surface of the wet slate plate, this indicates that the adhesive layer made from the adhesive composition of the present embodiment has absorbed water from the wet surface.

The adhesive composition according to the present embodiment may contain a tackifier (tackifying agent) for the purpose of adjusting the elastic modulus and imparting tackiness at the time of initial adhesion. Examples of the tackifier include polybutenes, rosin-based resins, terpene-based resins, petroleum-based resins (e.g., petroleum-based aliphatic hydrocarbon resins, petroleum-based aromatic hydrocarbon resins, and petroleum-based aliphatic/aromatic copolymerized hydrocarbon resins, petroleum-based alicyclic hydrocarbon resins (hydrogenated ones of aromatic hydrocarbon resins), etc.), coumarone-based resins, and the like. In view of compatibility with the base polymer, the tackifier is preferably petroleum-based resins and rosin-based resins. The tackifier may be used in one kind or by combining two or more kinds.

The content of the tackifier in the case where it is contained in the adhesive composition is, from the viewpoint of decreasing the elastic modulus, preferably 10 parts by mass or more, more preferably 30 parts by mass or more, and still more preferably 50 parts by mass or more, based on 100 parts by mass of the base polymer. In addition, the content of the tackifier is, from the viewpoint of imparting an appropriate cohesive force to the adhesive, preferably 500 parts by mass or less, more preferably 400 parts by mass or less, and still more preferably 250 parts by mass or less, based on 100 parts by mass of the base polymer.

To the adhesive composition of the present embodiment, additives usually added to an adhesive composition, such as viscosity modifiers, release modifiers, plasticizers, softeners, fillers, colorants (pigment, dye, etc.), antiaging agents, surfactants, leveling agents, antifoaming agents, light stabilizers, and the like may be further added to the extent that the advantageous effects of the present invention are not inhibited.

Examples of the filler include inorganic fillers such as talc, titanium oxide, calcium oxide, magnesium oxide, zinc oxide, titanium oxide, calcium carbonate, carbon, silica, clay, mica, barium sulfate, whiskers, magnesium hydroxide, and the like.

The content of the filler is, from the viewpoint of adhesiveness to rough surface, preferably 500 parts by mass or less, and more preferably 300 parts by mass or less, based on 100 parts by mass of the base polymer.

Moreover, various common solvents can be used as a solvent to be utilized for an adhesive composition. Examples of the solvents include organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone, and the like. The solvents may be used alone or by combining two or more kinds.

(Adhesive layer)

The adhesive layer of the present embodiment is formed using the above-mentioned adhesive composition. The formation method thereof is not particularly limited, but a known method can be adopted, and the formation can be performed in accordance with the following method for producing an adhesive sheet. The preferred range of the amount of each component in the adhesive layer is the same as the preferred range of the amount of each component excluding the solvent in the adhesive composition.

The adhesive layer in the present embodiment is formed using the above-mentioned adhesive composition. The formation method thereof is not particularly limited, but a known method can be adopted. For example, the adhesive layer can be obtained in the form of an adhesive sheet by applying the adhesive composition to a substrate mentioned later using a known coating method and drying the composition. Moreover, after the adhesive composition is applied to a surface having releasability and dried or cured to thereby form an adhesive layer on the surface, the adhesive layer may be pasted to a non-releasable substrate and then transferred thereto. The method for applying the adhesive composition to a substrate is not particularly limited, and the application can be performed using, for example, a gravure roll coater, a reverse roll coater, a kiss roll coater, a dip roll coater, a bar coater, a knife coater, a spray coater, a fountain die coater, a closed edge die coater, or the like.

The drying temperature can be, for example, 50 to 150°C.

Further, the adhesive layer may be formed by applying the adhesive composition to a release sheet (which may be a sheet-like substrate provided with a release surface).

The thickness of the adhesive layer after drying is not particularly limited, but is preferably 5 to 5000 $\mu$m and more preferably 10 to 1000 $\mu$m, from the viewpoint of exhibiting good followability to an adherend having an uneven surface.

The adhesive layer may be formed using a non-solvent coating method such as rolling or extrusion. In this case, the adhesive composition is heated and kneaded, and the adhesive composition can be obtained as a kneaded product. For example, a batch-type kneading machine such as a kneader, Banbury mixer or a mixing roll, a continuous kneading machine such as a twin-screw kneading machine, and the like are used for kneading. The heating temperature during kneading can be, for example, 80 to 180°C.

The adhesive layer 12 can be formed into a sheet shape by heating the adhesive composition obtained above with a molding machine such as an extruder, a calender roll or a press machine (heat press machine).

An adhesive sheet of the present embodiment has the adhesive layer mentioned above.

The concept of the adhesive sheet as referred to herein can include those called as an adhesive tape, an adhesive label, an adhesive film, and the like.

The adhesive sheet of the present embodiment may be an adhesive sheet with a substrate in a form having the adhesive layer on one side or both sides of a sheet-like substrate (support), or may be a substrate-less adhesive sheet in a form where the adhesive layer is held by a release sheet.

The adhesive sheet of the present embodiment may comprise other adhesive layer having a composition different from the adhesive layer described above.

The adhesive sheet of the present embodiment may be an adhesive sheet with a substrate in the form of comprising the other adhesive layer on one side or both sides of a sheet-like substrate (support) and having the adhesive layer (wet adhesive layer) according to the embodiment of the present invention on the other adhesive layer.

The adhesive sheet of the present embodiment may be an adhesive sheet with a substrate in the form of comprising the other adhesive layer on both sides of the sheet-like substrate (support) and having the wet adhesive layer on one other adhesive layer.

The adhesive sheet of the present embodiment may be a substrate-less adhesive sheet in the form of having the wet adhesive layer on one side or both sides of the other adhesive layer.

(Other adhesive layer)

The other adhesive layer is an adhesive layer having a composition different from the adhesive layer according to the embodiment of the present invention described above, and comprises an adhesive formed by an adhesive composition having a composition different from the adhesive composition according to the embodiment of the present invention. The adhesive is not particularly limited and can use the conventional adhesives. Examples of the adhesive include an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, an epoxy-based adhesive, and the like. Among them, from the viewpoint of adhesiveness, an acrylic adhesive, a urethane-based adhesive, a silicone-based adhesive, a rubber-based adhesive or a polyester-based adhesive is preferred, and an acrylic adhesive or a rubber-based adhesive is more preferred. Those adhesives may be used in one kind alone and may be used by combining two or more kinds.

The other adhesive layer can be formed by the same method as in the adhesive layer according the embodiment of the present invention described above.

The thickness of the other adhesive layer is not particularly limited, but from the viewpoint of rough surface followability to the surface of an adherend, is preferably 5 to 1200 $\mu$m, and more preferably 10 to 1000 $\mu$m.

The adhesive layer according to the embodiment of the present invention and the other adhesive layer are typically formed continuously, but are not limited to such a form. For example, those layers may be an adhesive layer formed in a regular or random pattern such as a dot shape or a stripe shape. The adhesive sheet of the present embodiment may have a roll shape and may have a stripe shape. Further, the adhesive layer may be an adhesive sheet having a form processed into various shapes.

(Substrate)

Examples of the material that forms the substrate include polyolefin-based films of polyethylene, polypropylene, and ethylene/propylene copolymer and the like; polyester-based films of polyethylene terephthalate and the like; plastic films of polyvinyl chloride and the like; and papers such as kraft paper and Japanese paper; cloths such as cotton cloth and Sufu (staple fiber) cloth; nonwoven fabrics such as polyester nonwoven fabric and vinylon nonwoven fabric; and metal foils, and the like. The thickness of the substrate is not particularly limited.

The plastic films may be unstretched films or stretched (uniaxially stretched or biaxially stretched) films. In addition, the surface of the substrate on which the adhesive layer is provided may be subjected to a surface treatment such as application of a primer, corona discharge treatment, or the like.

In the present embodiment, the adhesive sheet may be perforated to provide a through hole. In this way, when the adhesive sheet is attached to an adherend, water on the wet surface of the adherend can be released to the back side (opposite to the pasted surface) of the adhesive sheet through the through hole, so that more water on the wet surface of the adherend can be removed.

(Release liner)

In the adhesive sheet of the present embodiment, the adhesive layer according to the embodiment of the present invention and the other adhesive layer may be protected with a release liner (separator, release film) until the time of use. In addition, the protection with the release liner is also useful for maintaining the unreacted state of the unreacted moisture-curable component in the adhesive layer according to the embodiment of the present invention.

As the release liner, the conventional release paper or the like can be used, and is not particularly limited. For example, a substrate having a release-treated layer, a low adhesive substrate composed of a fluorine-based polymer, a low adhesive substrate composed of a nonpolar polymer, or the like can be used.

Examples of the substrate having a release-treated layer include plastic films, paper, and the like which have been surface-treated with a release treatment agent such as silicone-based one, long chain alkyl-based one, fluorine-based one, or molybdenum sulfide.

Examples of the fluorine-based polymer of the low adhesive substrate composed of a fluorine-based polymer include polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer, and the like.

Examples of the nonpolar polymer of the low-adhesive substrate composed of a nonpolar polymer include olefin-based resins (e.g., polyethylene, polypropylene, etc.), and the like. The release liner can be formed by a known or conventional method. In addition, the thickness and the like of the release liner are not particularly limited.

In the adhesive composition according to the present embodiment, the adhesive layer made from the adhesive composition, or the adhesive sheet comprising the adhesive layer, the moisture-curable component is preferably contained in an unreacted state.

(Package)

With regard to the adhesive composition, the adhesive layer, and the adhesive sheet (adhesive composition and the like) of the present embodiment, in order to maintain the unreacted state of the unreacted moisture-curable component in the adhesive composition and the like, it is preferable to reduce or block the influence of surrounding water (water and moisture). For example, the adhesive sheet of the present embodiment may be packaged with a suitable package. Example of the material of the package includes an aluminum-made moisture-proof bag, but the material is not limited thereto. Further, the atmosphere inside the package may be the air, but may be replaced by an inert gas such as nitrogen or argon. In addition, a desiccant such as silica gel may be also packaged inside the package.

(Adherend)

An adherend to which the adhesive sheet of the present embodiment is to be pasted is not particularly limited, but the adherend capable of chemically bonding to the moisture-curable component in an unreacted state in the adhesive composition (adhesive layer) is preferable.

Examples of the adherend include concrete, mortar, asphalt, metal, wood, tiles, plastic materials (for example, building exterior materials and interior materials such as a painted surface or an inner wall of a bathroom, underwater and water surface structures such as ship or buoy, aquarium, bathtub and sports equipment), cloths such as woven fabric or nonwoven fabric, papers, porous bodies such as an electrolyte membrane, a separation membrane or a filter, and the like. Moreover, the adherend may be a living body, and may be the outside of a living body (for example, skin, shell or scale), and the inside of a living body (for example, teeth or bone).

EXAMPLES

The present invention will be described in more detail below by reference to Examples, but the present invention should not be construed as being limited to these examples.

<Evaluation of reactivity of isocyanate compound>

(Measurement of maintenance ratio of moisture-curable component in base polymer (SIS))

A sample was prepared by adding 5 parts by mass of the isocyanate shown in Table 1 to 100 parts by mass of a base polymer SIS (QUINTAC 3520). Using the sample, an absorbance ratio of the absorbance at 2275 cm$^{-1}$ derived from an isocyanate group and the absorbance at 1462 cm$^{-1}$ derived from a methylene group of the base polymer obtained from infrared spectroscopy (measured by ATR method using 3100 FT-IR manufactured by Varian) was calculated. The absorbance ratio as used herein is a ratio of the absorbance derived from the isocyanate group to the absorbance derived from the methylene group (absorbance derived from isocyanate group/absorbance derived from methylene group).

Next, after storing each sample after measuring in the environment of 25°C and 50% RH, the absorbance ratio was calculated in the same manner as above.

The maintenance ratio of the moisture-curable component (isocyanate compound) in the base polymer was calculated from those change ratios. Specifically, it was calculated from the following relational expression.

$$\text{Maintenance ratio of moisture-curable component (isocyanate compound) (\%)} =$$
$$\{(\text{Absorbance ratio of adhesive sheet after storage under environment of 25°C and 50\% RH}$$
$$\text{for 24 hours})/(\text{Absorbance ratio of adhesive sheet immediately after production})\} \times 100$$

The results are shown in Table 1.

(Finger touch dryness test)

Finger touch dryness test was conducted based on JIS K-5400. An isocyanate stock liquid was dropped on an aluminum petri dish. After 6 hours under the environment of 20°C/60% RH, a fingertip was lightly touched to the center of a coating surface. The state that the fingertip is not stained by the sample was indicated as "Cured" and the state that the fingertip is stained by the sample was indicated as "Uncured".

(Curing and drying test)

Curing and drying test was conducted based on JIS K-5400. An isocyanate stock liquid was dropped on an aluminum petri dish. After 24 hours under the environment of 20°C/60% RH, the center of the coating surface was rapidly rubbed with a fingertip. The state that the rubbing does not mark on the coating was indicated as "Cured" and the state that the rubbing marks on the coating was indicated as "Uncured

[Table 1]

TABLE 1

| Product name | Aromatic isocyanate | | Aliphatic-alicyclic isocyanate | | | | |
| --- | --- | --- | --- | --- | --- | --- | --- |
| | TDI | XDI | HDI | | | IPDI | H6XDI |
| | Coronate L | Takenate D-110N | Basonat HA2000 | Basonat HI2000 | Takenate D-170N | Takenate D-140N | Takenate D-120N |
| Finger touch dryness after 6 hours | Cured | Cured | Uncured | Uncured | Uncured | Cured | Cured |
| Curing and drying after 24 hours | Cured | Cured | Uncured | Uncured | Uncured | Cured | Cured |
| Maintenance ratio (%) | 5 | 16 | 95 | 86 | 90 | 89 | 58 |

(Example 1)

A high molecular weight polyisobutylene polymer (OPANOL N80 manufactured by BASF): 50 parts by mass and a low molecular weight polyisobutylene polymer (TETRAX 5T manufactured by JXTG Energy Corporation): 50 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 16 parts by mass of hexamethylene diisocyanate (HDI) (BASONAT HA2000 manufactured by BASF) as a moisture-curable component, 100 parts by mass of a petroleum-based resin (T-Rez RB100 manufactured by JXTG Energy Corporation) as a tackifier and 100 parts by mass of heavy calcium carbonate (manufactured by Maruo Calcium Co., Ltd) as a filler to prepare an adhesive composition 1.

The adhesive composition 1 obtained by kneading was sandwiched between PET film (product name LUMIRROR S10 (25 μm) manufactured by Toray Industries, Inc.) as a substrate and a release liner (PET film, product name MRF (thickness 38 μm) manufactured by Mitsubishi Chemical Corporation), and an adhesive layer having a thickness of 300 μm was formed by hot press (working temperature 60°C). Thus, an adhesive sheet was prepared.

(Example 2)

A high molecular weight polyisobutylene polymer (OPANOL N80 manufactured by BASF): 75 parts by mass and a low molecular weight polyisobutylene polymer (TETRAX 5T manufactured by JXTG Energy Corporation): 25 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 34 parts by mass of hexamethylene diisocyanate (HDI) (BASONAT HA2000 manufactured by BASF) as a moisture-curable component, 100 parts by mass of a petroleum-based resin (T-Rez RB100 manufactured by JXTG Energy Corporation) as a tackifier, 200 parts by mass of heavy calcium carbonate (manufactured by Maruo Calcium Co., Ltd) as a filler and 3 parts by mass of carbon black (SEAST 3H manufactured by Tokai Carbon Co., Ltd) as a colorant to prepare an adhesive composition 2, and an adhesive sheet was prepared in the same manner as in Example 1.

(Example 3)

A high molecular weight polyisobutylene polymer (OPANOL N80 manufactured by BASF): 50 parts by mass and a low molecular weight polyisobutylene polymer (TETRAX 5T manufactured by JXTG Energy Corporation): 50 parts by mass as base polymers, and liquid polybutene (HV-300 manufactured by JXTG Energy Corporation): 100 parts by mass were dissolved in toluene as a solvent. Thereafter, with the solution obtained above were blended 16 parts by mass of hexamethylene diisocyanate (HDI) (BASONAT HA2000 manufactured by BASF) as a moisture-curable component, 100 parts by mass of a petroleum-based resin (T-Rez RB100 manufactured by JXTG Energy Corporation) as a tackifier, 100 parts by mass of heavy calcium carbonate (manufactured by Maruo Calcium Co., Ltd) as a filler and 16 parts by mass of an isobutylene-maleic anhydride copolymer (KI gel manufactured by Kuraray Trading Co., Ltd.) as a water-absorbing material to prepare an adhesive composition 3.

The adhesive composition 3 was applied to one surface of PET film (product name LUMIRROR S10 (25 μm) manufactured by Toray Industries, Inc.) as a substrate, dried at 80°C for 5 minutes and then further dried at 130°C for 30 minutes to prepare an adhesive layer having a thickness of 300 μm. The surface opposite the substrate of the adhesive layer formed on the substrate was pasted to a release surface of a release liner (PET film, product name MRF (thickness 38 μm) manufactured by Mitsubishi Chemical Corporation) to prepare an adhesive sheet.

(Example 4)

An acrylic polymer (BA100): 100 parts by mass as a base polymer was dissolved in ethyl acetate as a solvent. Thereafter, with the solution obtained above were blended 15 parts by mass of hexamethylene diisocyanate (HDI) (BASONAT HA2000 manufactured by BASF) as a moisture-curable component, 100 parts by mass of a liquid fully hydrogenated rosin methyl ester resin (M-HDR manufactured by Maruzen Petrochemical Co., Ltd.) as a tackifier and 10 parts by mass of an isobutylene-maleic anhydride copolymer (KI gel manufactured by Kuraray Trading Co., Ltd.) as a water-absorbing material to prepare an adhesive composition 4, and an adhesive sheet was prepared in the same manner as in Example 3.

(Example 5)

An acrylic thermoplastic elastomer (KURARITY LA3320 manufactured by Kuraray Co., Ltd.): 75 parts by mass and an acrylic thermoplastic elastomer (KURARITY LA1140 manufactured by Kuraray Co., Ltd.): 25 parts by mass as base polymers were dissolved in ethyl acetate as a solvent. Thereafter, with the solution obtained above were blended 22 parts by mass of hexamethylene diisocyanate (HDI) (BASONAT HA2000 manufactured by BASF) as a moisture-curable component, 20 parts by mass of a liquid fully hydrogenated rosin methyl ester resin (M-HDR manufactured by Maruzen Petrochemical Co., Ltd.) as a tackifier and 50 parts by mass of a terpene-phenol resin (YS POLYSTER S-145 manufactured by Yasuhara Chemical Co., Ltd.) to prepare an adhesive composition 5.

The adhesive composition 5 was applied to one surface of PET film (product name LUMIRROR S10 (25 μm) manufactured by Toray Industries, Inc.) as a substrate, dried at 130°C for 10 minutes and then further dried at 130°C for 30 minutes to prepare an adhesive layer having a thickness of 50 μm. The surface opposite the substrate of the adhesive layer formed on the substrate was pasted to an adhesive surface of an acrylic foam base strong adhesive double-sided tape (HYPERJOINT manufacture by Nitto Denko Corporation) to prepare an adhesive sheet having a structure shown in FIG. 6.

(Example 6)

A high molecular weight polyisobutylene polymer (OPANOL N80 manufactured by BASF): 75 parts by mass and by mass of a low molecular weight polyisobutylene polymer (TETRAX 5T manufactured by JXTG Energy Corporation): 25 parts as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 34 parts by mass of hexamethylene diisocyanate (HDI) (BASONAT HA2000 manufactured by BASF) as a moisture-curable component and100 parts by mass of a petroleum-based resin (T-Rez RB100 manufactured by JXTG Energy Corporation) as a tackifier to prepare an adhesive composition 6.

The adhesive composition 6 was applied to one surface of PET film (product name LUMIRROR S10 (25 μm) manufactured by Toray Industries, Inc.) as a substrate, dried at 80°C for 5 minutes and then further dried at 130°C for 30 minutes to prepare an adhesive layer having a thickness of 20 $\mu$m. The surface opposite the substrate of the adhesive layer formed on the substrate was pasted to an adhesive surface from which a release liner had been peeled of an aluminum base-attached butyl rubber-based adhesive tape (waterproof airtight tape LA manufactured by Nitto Denko Corporation) to prepare an adhesive sheet having a structure shown in FIG. 4.

(Example 7)

A high molecular weight polyisobutylene polymer (OPANOL N80 manufactured by BASF): 90 parts by mass and a low molecular weight polyisobutylene polymer (TETRAX 5T manufactured by JXTG Energy Corporation): 10 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 34 parts by mass of hexamethylene diisocyanate (HDI) (BASONAT HA2000 manufactured by BASF) as a moisture-curable component and 100 parts by mass of a petroleum-based resin (T-Rez RB100 manufactured by JXTG Energy Corporation) as a tackifier to prepare an adhesive composition 7.
The adhesive composition 7 was applied to one surface of PET film (product name LUMIRROR S10 (25 $\mu$m) manufactured by Toray Industries, Inc.) as a substrate, dried at 80°C for 5 minutes and then further dried at 130°C for 30 minutes to prepare an adhesive layer having a thickness of 50 $\mu$m. The surface opposite the substrate of the adhesive layer formed on the substrate was pasted to an adhesive surface from which a release liner had been peeled of an aluminum base-attached butyl rubber-based adhesive tape (waterproof airtight tape LA manufactured by Nitto Denko Corporation) to prepare an adhesive sheet having a structure shown in FIG. 4.

(Example 8)

A high molecular weight polyisobutylene polymer (OPANOL N80 manufactured by BASF): 25 parts by mass and a low molecular weight polyisobutylene polymer (TETRAX 5T manufactured by JXTG Energy Corporation): 75 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 60 parts by mass of a moisture-curable silyl group-containing olefin resin (Vestplastic 206 manufactured by Evonik Degussa) as a moisture-curable component, 100 parts by mass of a petroleum-based resin (T-Rez RB100 manufactured by JXTG Energy Corporation) as a tackifier, 200 parts by mass of heavy calcium carbonate (manufactured by Maruo Calcium Co., Ltd) as a filler and 3 parts by mass of zinc oxide (manufactured by FUJIFILM Wako Pure Chemical Corporation) as a catalyst to prepare an adhesive composition 8, and an adhesive sheet was prepared in the same manner as in Example 1.

(Example 9)

A high molecular weight polyisobutylene polymer (OPANOL N80 manufactured by BASF): 25 parts by mass and a low molecular weight polyisobutylene polymer (TETRAX 5T manufactured by JXTG Energy Corporation): 75 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 60 parts by mass of a moisture-curable silyl group-containing olefin resin (Vestplastic 206 manufactured by Evonik Degussa) as a moisture-curable component, and 100 parts by mass of a petroleum-based resin (T-Rez RB100 manufactured by JXTG Energy Corporation) as a tackifier to prepare an adhesive composition 9.
The adhesive composition 9 was applied to one surface of PET film (product name LUMIRROR S10 (25 $\mu$m) manufactured by Toray Industries, Inc.) as a substrate, dried at 80°C for 5 minutes and then further dried at 130°C for 30 minutes to prepare an adhesive layer having a thickness of 300 $\mu$m. The surface opposite the substrate of the adhesive layer formed on the substrate was pasted to an adhesive surface from which a release liner had been peeled of an aluminum base-attached butyl rubber-based adhesive tape (waterproof airtight tape LA manufactured by Nitto Denko Corporation) to prepare an adhesive sheet having a structure shown in FIG. 4.

(Example 10)

A high molecular weight polyisobutylene polymer (OPANOL N80 manufactured by BASF): 75 parts by mass and a low molecular weight polyisobutylene polymer (TETRAX 5T manufactured by JXTG Energy Corporation): 25 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch. Then, with 100 parts by mass of the masterbatch were blended 100 parts by mass of liquid polybutene (HV-300 manufactured by JXTG Energy Corporation), 5 parts by mass of a silyl-ended polyether resin (SILYL SAT350 manufactured by Kaneka Corporation) as a moisture-curable component, 100 parts by mass of a petroleum-based resin (T-Rez RB100 manufactured by JXTG Energy Corporation) as a tackifier and 0.025 parts by mass of dibutyltin acetate (manufactured by Tokyo Chemical Industry Co., Ltd.) as a catalyst to prepare an adhesive composition 10, and an adhesive sheet was prepared in the same manner as in Example 9.

(Comparative Example 1)

An adhesive composition of Comparative Example 1 was prepared in the same manner as in the adhesive composition 1 of Example 1, except for further adding 20 parts by mass of an isobutylene-maleic anhydride copolymer (KI gel manufactured by Kuraray Trading Co., Ltd.) as a water-absorbing material, and an adhesive sheet was prepared in the same manner as in Example 1.

(Comparative Example 2)

An adhesive composition of Comparative Example 2 was prepared in the same manner as in Example 3, except that each component of Example 3 was the formulation shown in Table 2, and an adhesive sheet was prepared in the same manner as in Example 3.

<Measurement of water absorption ratio>

The adhesive sheet (adhesive layer) having a release liner pasted to both surfaces thereof was obtained in the same manner as above, except PET film is not used as a substrate, but was used as a release liner (PET film (product name: MRE (thickness 38 $\mu$m)), and was cut so as to have a size of width: 10 mm and length: 10 mm, and the release liner (PET film (product name: MRE (thickness 38 $\mu$m) manufactured by Toray Industries, Inc.) on one side was peeled to obtain a sample. The sample produced was stored in the environment of 25°C/50% RH for 24 hours, and the water absorption ratio was measured by Karl Fisher moisture evaporation coulometric titration method (JIS K0113: 2005). In the measurement, the amount of water generated by heating evaporation at 200°C for 30 minutes was measured using Hiranuma Moisture Meter AQ-2100 manufactured by HIRANUMA, and the proportion to the mass of a sample before heating was calculated as the water absorption ratio (before water dipping).
Further, the sample produced in the same manner was dipped in 20°C pure water for 24 hours, and then the water absorption ratio (after water dipping) was calculated in the same manner.

$$\text{Water absorption ratio (\% by mass)} = (\text{Amount of water measured by Karl}$$

$$\text{Fisher/total mass of sample before measurement}) \times 100$$

<Measurement of maintenance ratio of moisture-curable component>

(Isocyanate compound)

A release liner was peeled and removed from the adhesive sheet of each example immediately after the production, and for the adhesive surface side of the adhesive layer, a ratio of the absorbance at 2275 cm$^{-1}$ derived from an isocyanate group and the absorbance at 1462 cm$^{-1}$ derived from a methylene group of the base polymer, obtained from infrared spectroscopy (using 3100 ET-IR manufactured by Varian, measuring by ATR method) was calculated.
Next, regarding the adhesive sheet after storage under the environment of 25°C and 50% RH for 24 hours, the absorbance ratio was calculated in the same manner as above.
From those change ratios, the maintenance ratio of the moisture-curable component (isocyanate compound) in the adhesive composition was calculated. Specifically, it was calculated from the following relational expression.

$$\text{Maintenance ratio (\%) of moisture-curable component (isocyanate compound) in}$$

$$\text{adhesive composition} = \{(\text{Absorbance ratio of sample after storage under environment of}$$

$$25°C \text{ and } 50\% \text{ RH for 24 hours})/(\text{absorbance ratio of sample immediately after production})\}$$

$$\times 100$$

The results are shown in Table 2

(Alkoxysilyl group)

Using a heating apparatus (TDS) manufactured by Gerstel, 20 mg of each of the adhesive sheets (adhesive layers) produced in Examples 8 to 10 above was heated. A gas generated was cold-trapped by liquid nitrogen and used as a sample. The amount of alcohol formed by thermal decomposition of the alkoxysilyl group was determined by gas chromatograph mass spectrometry (GC/MS) using 6890 plus/5973N manufactured by Agilent Technologies.
Next, after storing the adhesive sheet (adhesive layer) produced in each of Examples 8 to 10 above under the environment of 25°C and 50% RH for 24 hours, a sample was produced in the same manner as above. The amount of alcohol was determined, and the maintenance ratio of the alkoxysilyl group was calculated. Specifically, it was calculated from the following relational expression.

$$\text{Maintenance ratio (\%) of moisture-curable component (alkoxysilyl group)} =$$

$$[(\text{Amount of alcohol obtained from GC/MS of adhesive sheet (adhesive layer) after storage}$$

$$\text{under environment of } 25°C \text{ and } 50\% \text{ RH for 24 hours})/(\text{amount of alcohol obtained from}$$

$$\text{GC/MS of adhesive sheet (adhesive layer) immediately after production})] \times 100$$

The results are shown in Table 2.

<Measurement of Young's modulus>

An adhesive layer was round into a string to prepare a sample (cross-section 3 mm$^2$). The sample was subjected to a tensile test under the conditions of temperature: 25°C, tensile rate: 50 mm/min, chuck distance: 10 mm and road cell: 50 N using a tensile tester (AG-IS manufactured by Shimadzu Corporation). Tensile strength (N) and average elongation (%) just before breakage were read from stress-strain (S-S) waveform (measurement chart), and Young's modulus (initial) (kPa) was calculated from the S-S waveform.
In addition, after storing the sample prepared in the same manner as above in 25°C pure water for 24 hours, Young's modulus (after curing) was calculated in the same operation as above. In the sample that swells, although the cross-section varies, it was evaluated as apparent Young's modulus.

<Measurement of 180° peel adhesive force>

A slate plate having a size of thickness: 3 mm, width: 30 mm and length: 125 mm was prepared from a slate standard plate, product name "JIS A5430 (FB)" (hereinafter referred to as a slate plate) manufactured by Nippon Testpanel Co., Ltd. A glossy surface of the slate plate was used. The slate plate was dried at 130°C for 1 hour, and the mass of the slate plate at this time was measured, and the mass was defined as "mass of slate plate before dipping in water".
Subsequently, the slate plate prepared was deaerated in the state of dipping in water by an ultrasonic deaerator (BRANSON 3510 manufactured by Yamato Scientific Co., Ltd.) for 1 hour, allowed to stand for 24 hours, and then taken out of the water. Water on the slate plate was wiped off, the mass of the slate plate at this time was measured, and the mass was defined as "mass of slate plate after dipping and deaerating in water".
Based on the "mass of slate plate before dipping in water" and "mass of slate plate after dipping and deaerating in water", water absorption of the slate plate was calculated by the following expression. As a result, the water absorption ratio was 25% (% by mass).

$$\text{Water absorption ratio (\% by mass) of slate plate} = [\{(\text{Mass of slate plate after}$$
$$\text{dipping and deaerating in water}) - (\text{mass of slate plate before dipping in water})\}/(\text{Mass of}$$
$$\text{slate plate before dipping in water})] \times 100$$

\<Measurement of wet adhesive force\>

The adhesive sheet prepared in the same manner as above was cut so as to have a size of width: 20 mm and length: 10 cm, and the release liner was peeled and removed.

Subsequently, the adhesive sheet produced in each example was press-bonded and pasted, by one reciprocation with 2 kg roller, to the surface (wet surface) of the slate plate from which water had been wiped off. Each slate was covered with a wrap one by one in order to prevent drying of the slate, and the entire surface of each slate was further covered with an aluminum foil and then allowed to stand for 72 hours. Thereafter, the slate having the adhesive sheet (test piece) pasted thereto was taken out, and 180° peel adhesive force (wet adhesive force) (N/20 mm) in peel temperature: 23°C and peel rate: 300 mm/min to the slate plate was measured using a tensile tester (Technograph TG-1kN manufactured by MINEBEA).

\<Measurement of adhesive force in water\>

Similar to the above, the adhesive sheet produced was pasted to the surface of the slate plate from which water had been wiped off, immediately dipped in water and then allowed to stand for 72 hours. Thereafter, the slate plate having the adhesive sheet (adhesive layer) pasted thereto was taken out of the water, and 180° peel adhesive force (adhesive force in water) (N/20 mm) in peel temperature: 23°C and peel rate: 300 mm/min to the slate plate was measured using a tensile tester (Technograph TG-1kN manufactured by MINEBEA).

\<Measurement of degree of swelling\>

An adhesive sheet having a release liner pasted to both surfaces thereof was produced in the same manner as in the measurement of the water absorption ratio. After peeling and removing the release liner on one surface, the exposed surface was pasted to one surface of a substrate (aluminum foil, thickness: 20 $\mu$m). The adhesive sheet having an aluminum foil on one surface thereof was cut into 2 cm square to prepare a sample, and the sample was stored in 25°C pure water for 24 hours. The thickness of the adhesive layer before and after storage in water was measured using Dial Gauge R1-205 manufactured by Peacock, and the degree of swelling was calculated by the following expression. The thickness of the adhesive layer was measured at 5 points on the central part of the sample, and the average value was adopted.

$$\text{Degree of swelling} = \text{Thickness of adhesive layer after storage in water/Thickness}$$
$$\text{of adhesive layer before storage in water}$$

\<Absorbance of water in peel interface\>

A slate plate having a thickness of 3 mm, a width of 30 mm and a length of 120 mm was dipped in tap water, treated with an ultrasonic deaerator (BRANSON 3510 manufactured by Yamato Scientific Co., Ltd.) for 30 minutes, allowed to stand for 24 hours, and then taken out of the water. Thus, a slate plate having water absorbance of 23% by mass was produced.

Regarding the slate plate having water absorbance of 23% by mass, a ratio of the absorbance in the peak (1410 cm$^{-1}$) derived from calcium carbonate and the absorbance in the peak (3350 cm$^{-1}$) derived from a hydroxyl group by Fourier transform infrared spectroscopy (using 3100 ET-IR manufactured by Varian, measuring by ATR method) was calculated. The absorbance ratio of water is a ratio of the absorbance derived from the hydroxyl group to the absorbance derived from the calcium carbonate (absorbance derived from calcium carbonate/absorbance derived from hydroxyl group).

The absorbance ratio of water of the slate plate having water absorbance of 23% by mass was 2.6.

Next, the adhesive sheet of each example produced in the same manner as above was cut so as to have a size of width: 20 mm and length: 100 mm, and the release liner was peeled and removed.

Subsequently, the adhesive sheet (test piece) produced in each example was press-bonded and pasted, by one reciprocation with 2 kg roller, to the surface (wet surface) of the slate plate having the water absorbance of 23% by mass from which water had been wiped off. Each slate was covered with a wrap one by one in order to prevent drying of the slate, and the entire surface of each slate was further covered with an aluminum foil and then allowed to stand for 72 hours. Thereafter, the slate having the adhesive sheet (test piece) pasted thereto was taken out, the adhesive sheet was peeled, and the absorbance ratio on the surface from which the adhesive sheet had been peeled of the slate plate (absorbance ratio of water in peel interface) was measured.

The above measurement results and the results that observed the state of the adhesive layer after peeling are shown in Table 2.

[Table 2]

TABLE 2

| | | Ex. 1 | Ex. 2 | Ex. 3 | Ex. 4 | Ex. 5 | Ex. 6 | Ex. 7 | Ex. 8 | Ex. 9 | Ex. 10 | Com. Ex. 1 | Com. Ex. 2 |
|---|---|---|---|---|---|---|---|---|---|---|---|---|---|
| Preparation method | | Kneading + hot press | Kneading + hot press | Solvent coating | Solvent coating | Solvent coating + pasting | Solvent coating + pasting | Solvent coating + pasting | Kneading + hot press | Solvent coating + pasting | Solvent coating + pasting | Kneading + hot press | Solvent coating |
| Constitution of adhesive | General-purpose tape layer | - | - | - | - | Hyperjoint H8004 | Waterproof airtight tape LA | Waterproof airtight tape LA | - | Waterproof airtight tape LA | Waterproof airtight tape LA | - | - |
| | Wet adhesive layer ($\mu$m) | 300 | 300 | 300 | 300 | 50 $\mu$m | 20 | 50 | 300 | 300 | 300 | 300 | 300 |
| Base polymer | OPANOL N80 | 50 | 75 | 50 | | | 75 | 90 | 25 | 25 | 75 | 50 | 50 |
| | Tetrax 5T | 50 | 25 | 50 | | | 25 | 10 | 75 | 75 | 25 | 50 | 50 |
| | HV300 | 100 | 100 | 100 | | | 100 | 100 | 100 | 100 | 100 | 100 | 100 |
| | KURARITY 3320 | | | | | 75 | | | | | | | |
| | KURARITY 1140 | | | | | 25 | | | | | | | |
| | BA100 | | | | 100 | | | | | | | | |
| | Water content (ppm) | 50 | 50 | 50 | 440 | 500 | 50 | 50 | 50 | 50 | 50 | 50 | 50 |
| Tackifier | T-rez RB100 | 100 | 100 | 100 | | | 100 | 100 | 100 | 100 | 100 | 100 | 100 |
| | m-HDR | | | | 100 | 20 | | | | | | | |
| | YS POLYSTER S145 | | | | | 50 | | | | | | | |
| Filler | Heavy calcium carbonate | 100 | 200 | 100 | | | | | 200 | | | 100 | 100 |

(continued)

| | | Ex. 1 | Ex. 2 | Ex. 3 | Ex. 4 | Ex. 5 | Ex. 6 | Ex. 7 | Ex. 8 | Ex. 9 | Ex. 10 | Com. Ex. 1 | Com. Ex. 2 |
|---|---|---|---|---|---|---|---|---|---|---|---|---|---|
| Catalyst | Zinc oxide | | | | | | | | 3 | | | | |
| | Dibutyltin acetate | | | | | | | | | | 0.025 | | |
| Water-absorbing material | KI gel | | | 16 | 10 | | | | | | | 20 | 90 |
| Moisture-curable component | HA2000 | 16 | 34 | 16 | 15 | 22 | 34 | 34 | | | | 16 | 15 |
| | Vestplast 206 | | | | | | | | 60 | 60 | | | |
| | Sily1 SAT350 | | | | | | | | | | 5 | | |
| Coloring agent | SEAST 3H | | 3 | | | | | | | | | | |
| Degree of swelling | | 1.01 | 1.07 | 2.29 | 2.10 | 1.10 | 1.02 | 1.01 | 1.03 | 1.01 | 1.05 | 3.20 | 8.74 |
| 180° peel (N/20 mm) thickness 300 μm | Wet adhesive strength | 22 | 34 | 24 | 18 | 12 | 18 | 18 | 19 | 18 | 10 | 29 | 35 |
| | Adhesive force in water | 19 | 7 | 23 | 15 | 13 | 18 | 18 | 30 | 18 | 10 | 0.11 | 0.01 |
| Water content of adhesive (% by mass) | Before water dipping | 0.02 | 0.04 | 0.25 | 0.03 | 0.01 | 0.02 | 0.02 | 0.01 | 0.03 | 0.01 | 0.28 | 0.26 |
| | After water dipping | 0.1 | 0.3 | 3.8 | 4.5 | 0.1 | 0.1 | 0.2 | 0.3 | 0.1 | 0.1 | 42.4 | 81.6 |
| Maintenance ratio of moisture-curable component (%) | Isocyanate | 98 | 95 | 99 | 98 | 96 | 99 | 97 | | | | 95 | 94 |
| | Alkoxysilyl group | | | | | | | | 98 | 95 | 97 | | |
| Young's modulus (initial) (kPa) | | 14 | 55 | 24 | 15 | 20 | 36 | 47 | 44 | 20 | 37 | 20 | 25 |

(continued)

| | Ex. 1 | Ex. 2 | Ex. 3 | Ex. 4 | Ex. 5 | Ex. 6 | Ex. 7 | Ex. 8 | Ex. 9 | Ex. 10 | Com. Ex. 1 | Com. Ex. 2 |
|---|---|---|---|---|---|---|---|---|---|---|---|---|
| Young's modulus (after curing) (kPa) | 18 | 79 | 26 | 20 | 22 | 42 | 74 | 82 | 40 | 48 | 30 | Impossible to measure |
| Absorbance ratio of water in peel interface | 1.4 | 1.5 | 1.2 | 1.3 | 1.4 | 1.3 | 1.5 | 1.6 | 1.5 | 1.4 | 2.5 | 2.6 |

As shown in Table 2, it is understood that the adhesive compositions and adhesive sheets of Examples 1 to 10 having the degree of swelling when the adhesive layer is formed within the range defined in the present invention exhibit high adhesive force to a wet surface and show excellent adhesive force even after storing in water, thus having excellent water resistance.

While the absorbance ratio of water of the slate plate having water absorption of 23% by mass was 2.6, the measurement results of absorbance ratio of water in the peel interface were that Comparative Examples 1 and 2 were the equivalent values of 2.5 and 2.6, but Examples 1 to 10 were low values of 1.2 to 1.6. It can be presumed from the results that the water contained in the slate plate was consumed by the reaction with the moisture-curable component.

On the other hand, it is understood that in the adhesive sheets and adhesive sheets of Comparative Examples 1 and 2 having the degree of swelling outside the range defined in the present invention, the degree of swelling after storing in water and water absorption ratio are high, the adhesive force is low and water resistance is poor.

Although the present invention has been described in detail and by reference to the specific embodiments, it is apparent to one skilled in the art that various modifications or changes can be made without departing the spirit and scope of the present invention.

This application is based on Japanese Patent Application No. 2018-102821 filed on May 29, 2018, and Japanese Patent Application No. 2019-098480 filed on May 27, 2019, the disclosures of which are incorporated herein by reference.

REFERENCE SIGNS LIST

10, 30, 40, 50, 60, 70, 80: Adhesive sheet
11, 31, 41, 51, 61, 71: Substrate
12, 42: Adhesive layer
72: Wet adhesive sheet
13, 53: Release liner
32A: First adhesive layer
32B: Second adhesive layer
62A, 82A: First wet adhesive layer
62B, 82B: Second wet adhesive layer
33A, 43A, 53A, 63A, 73A, 83A: First release liner
33B, 43B, 53B, 63B, 73B, 83B: Second release liner
54, 84: Other adhesive layer
64A, 74A: First other adhesive layer
64B, 74B: Second other adhesive layer

**Claims**

1. An adhesive composition containing a base polymer and a moisture-curable component, wherein a degree of swelling when an adhesive layer is formed is 2.5 or less.

2. The adhesive composition according to claim 1, wherein the moisture-curable component is at least one selected from an isocyanate compound and an alkoxysilyl group-containing polymer.

3. The adhesive composition according to claim 1 or 2, wherein the moisture-curable component is aliphatic isocyanate or alicyclic isocyanate.

4. The adhesive composition according to any one of claims 1 to 3, wherein the base polymer contains a rubber-based polymer or an acrylic polymer.

5. The adhesive composition according to any one of claims 1 to 4, wherein a water absorption ratio after dipping in 20°C pure water for 24 hours when an adhesive layer is formed is 20% by mass or less.

6. The adhesive composition according to any one of claims 1 to 5, wherein Young's modulus at 25°C when an adhesive layer is formed and cured by moisture is 15 kPa or more and 100 kPa or less.

7. The adhesive composition according to any one of claims 1 to 6, wherein Young's modulus at 25°C when an adhesive layer is formed is 10 kPa or more and 400 kPa or less.

8. An adhesive layer comprising the adhesive composition according to any one of claims 1 to 7.

9. An adhesive sheet comprising the adhesive layer according to claim 8.

10. The adhesive sheet according to claim 9, wherein the adhesive layer is formed on a substrate.

Fig. 1

Fig. 2

Fig. 3

Fig. 4

Fig. 5

Fig. 6

Fig. 7

EP 3 805 335 A1

## INTERNATIONAL SEARCH REPORT

International application No.

PCT/JP2019/020990

### A. CLASSIFICATION OF SUBJECT MATTER

Int.Cl.   C09J201/00(2006.01)i,  C09J7/32(2018.01)i,  C09J11/06(2006.01)i,
C09J121/00(2006.01)i, C09J133/00(2006.01)i

According to International Patent Classification (IPC) or to both national classification and IPC

### B. FIELDS SEARCHED

Minimum documentation searched (classification system followed by classification symbols)
Int.Cl.  C09J1/00-201/10

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 58-171460 A (NITTO ELECTRIC IND CO., LTD.) 08 October 1983, claims, page 1, right column, line 16 to page 2, upper left column, line 10, examples 1-3 (Family: none) | 1-10 |
| X | JP 3-220283 A (HAMADA, Hideo) 27 September 1991, claims, page 3, upper right column, lines 11-15, page 3, lower left column, line 9 to page 3, lower right column, line 4, page 4, lower left column, line 16 to page 4, lower right column, line 4, page 5, lower left column, lines 13-20, fig. 1 & US 5200268 A, claims, column 3, lines 1-33, column 4, lines 48-57, column 5, line 61 to column 6, line 2, fig. 1 | 1-2,4-10 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 July 2019 (31.07.2019) | 13 August 2019 (13.08.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

30

**INTERNATIONAL SEARCH REPORT**

| International application No. |
|---|
| PCT/JP2019/020990 |

C (Continuation).   DOCUMENTS CONSIDERED TO BE RELEVANT

| Category* | Citation of document, with indication, where appropriate, of the relevant passages | Relevant to claim No. |
|---|---|---|
| X | US 2016/0257858 A1 (AVERY DENNISON CORPORATION) 08 September 2016, claims, example 3 (paragraphs [0163]-[0169]) & WO 2015/053807 A1 & EP 3055372 A1 & CA 2927081 A & CN 104870590 A | 1-2,4-10 |
| X | US 2013/0284364 A1 (COUTURIER, Marysusan) 31 October 2013, claims, paragraph [0055] & WO 2012/061032 A1 | 1-2,4-10 |
| X | JP 2017-71749 A (DAINIPPON PRINTING CO., LTD.) 13 April 2017, claims, paragraph [0125] (Family: none) | 1,5,8-10 |
| A | JP 60-245681 A (NITTO ELECTRIC IND CO., LTD.) 05 December 1985, column 1, page 3, lower left column, lines 7-11, examples 2-4, comparative examples (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000273418 A
- JP 2018102821 A

- JP 2019098480 A